# EUROPEAN PATENT SPECIFICATION

(11) **EP 3 900 563 B1**
(45) Date of publication and mention of the grant of the patent: **03.09.2025**
(21) Application number: 19899540.9
(22) Date of filing: 12.12.2019
(51) Int. Cl.: A42B 3/04, G02B 27/02, H04N 5/64, G02B 27/01, G03B 21/56

(54) **SCREEN DEVICE AND HELMET**
SCHIRMVORRICHTUNG UND HELM
DISPOSITIF D'ÉCRAN ET CASQUE

(30) Priority: 20.12.2018 JP 2018238122
(43) Date of publication of application: 27.10.2021
(73) Proprietor: SHOEI CO., LTD., Taito-ku Tokyo 110-0016 (JP); NS West Inc., Shobara-shi, Hiroshima, 727-0004 (JP)
(72) Inventor: ISOBE Eiji, Tokyo 110-0016 (JP)
(74) Representative: Petraz, Gilberto Luigi
(86) International application number: PCT/JP2019/048631
(87) International publication number: WO 2020/129795

(56) References cited:
- WO-A1-2016/022984
- WO-A1-2018/118433
- CN-A- 108 323 855
- JP-A- 2006 319 440
- JP-A- 2018 124 486
- JP-A- H06 281 879
- US-A- 5 537 092
- US-A1- 2018 217 381

## Description

### TECHNICAL FIELD

The present disclosure relates to a screen device onto which an image is projected and a helmet provided with the screen device.

### BACKGROUND ART

A typical known head-mounted display (HMD) is mounted on a two-wheeled vehicle helmet to show information about driving using virtual images. A display unit (display device) is arranged in the helmet to emit image showing light, and the HMD reflects the image showing light on a shield so that the image showing light is directed to the eyes of the driver. When a driver wears a helmet including an HMD and rides a two-wheeled vehicle, the driver can see, for example, vehicle information such as vehicle speed, map information obtained from a navigation system, and warning information while facing forward. As a result, immoderate sightline movements or posture changes of the driver are reduced. For example, actions of the driver such as facing downward to see a meter panel arranged on a handlebar of the two-wheeled vehicle are reduced. This stabilizes the driving. Patent Document 1 describes an example of a device that shows information from a navigation system.

The device described in Patent Document 1 includes a processor and memory including a computer program code. The device determines that the user is wearing a helmet during the occurrence of a navigation event. The device also determines a set of navigation notifications that are associated with the navigation event and are configured to be displayed in the helmet. The navigation set is adjusted so as to be displayed in the helmet. Patent document 2 describes an AR intelligent helmet. Patent document 3 describes a display device. Patent document 4 describes a helmet display including an information display horizontally aligned in a spaced relation along a curvature of a helmet jaw. Patent document 5 describes helmet system and methods.

### PRIOR ART DOCUMENT

### Patent Document

Patent Document 1: International Patent Publication No. 2014/096517. Patent document 2: Chinese Patent Application No. 108323855. Patent document 3: United States Patent Application No. 2018/217381. Patent document 4: United States Patent Application No. 5537092. Patent document 5: International Patent Publication No. 2016/022984.

### SUMMARY OF THE INVENTION

### Problems that the Invention is to Solve

Patent Document 1 describes that the device, for example, displays navigation notifications in a shield (visor) of the helmet.

The shield ensures visibility of a helmet, ensures protection against wind and rain, and is configured to open and close. An attaching mode of the shield that ensures these features is specified for a helmet. The field of view of a wearer varies depending on the posture and physical characteristics of the wearer. However, it is difficult to freely adjust a helmet shield so that the helmet shield fits to the posture and physical characteristics of the wearer. When the shield is used as a screen of an HMD or the like, it is difficult to adjust the position of the shield to a position in the field of view where the wearer can readily see an image projected on the screen.

It is an object of the present invention to provide a screen device and a helmet including the screen device that allows a set position of a screen to be readily adjusted in the helmet.

### Means for Solving the Problems

The present invention is defined in annexed independent claim 1. Other advantageous features are defined in the dependent claims.

An aspect of the present disclosure is a helmet that includes a projector that projects an image and the screen device described above. The screen device shows the image projected by the projector in a field of view of a wearer.

### BRIEF DESCRIPTION OF THE DRAWINGS

Fig. 1 is a side view showing an exterior structure of an embodiment of a helmet.
Fig. 2 is a perspective view showing a mechanism forming a display located inside the helmet shown in Fig. 1.
Fig. 3 is an exploded perspective view showing a screen device of the helmet shown in Fig. 1.
Fig. 4 is a left view of the screen device of the helmet shown in Fig. 1.
Fig. 5 is a rear view of the screen device of the helmet shown in Fig. 1.
Fig. 6 is an exploded perspective view of the screen device of the helmet shown in Fig. 1.
Fig. 7 is an exploded perspective view of the screen device of the helmet shown in Fig. 1.
Figs. 8A, 8B, 8C, and 8D are diagrams showing positions of the screen device of the helmet shown in Fig. 1, Fig. 8A is a diagram showing a screen located at a high position in a projection position, Fig. 8B is a diagram showing the screen located at a high position in a non-projection position, Fig. 8C is a diagram showing the screen located at a low position in the projection position, and the Fig. 8D is a diagram showing the screen located at a low position in the non-projection position.

### MODES FOR CARRYING OUT THE INVENTION

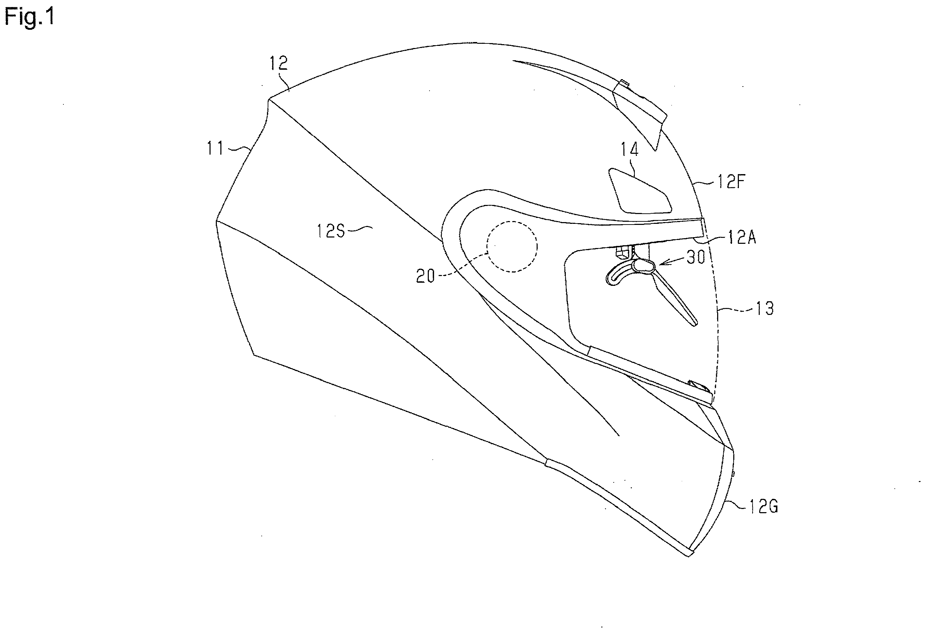

An embodiment of a helmet will now be described with reference to Figs. 1 to 8D.

As shown in Fig. 1, a helmet includes a spherical helmet 11, a shield 13, and two support mechanisms 20. In the description hereafter, in the state of the helmet 11 shown in Fig. 1, a side where the shield 13 is located is referred to as the front side. A direction in which the two support mechanisms 20, one of which is shown on a left surface 12S, are arranged is referred to as the sideward direction.

The two support mechanisms 20 arranged at the left and right sides are fixed to an outer shell 12 that forms the helmet 11.

The outer shell 12 defines the outermost shell of the helmet 11. Although not particularly limited, it is preferred that the material of the outer shell 12 is any one selected from acrylonitrile-butadiene-styrene copolymer (ABS), polycarbonate (PC), and a thermosetting resin impregnated with reinforcement fibers. The outer shell 12 has a front surface 12F including an opening 12A that is open forward. The opening 12A ensures visibility for the wearer. The front surface 12F of the outer shell 12 includes a chin guard 12G located below the opening 12A. That is, the helmet 11 is a full face helmet.

The shield 13 is a colorless transparent plate member that is transmissive to light. The shield 13 is rotationally supported by the two support mechanisms 20, which are arranged at the left and right sides. When receiving an operating force that moves the shield 13, the shield 13 moves between an open position and a closed position. When the shield 13 is located at the open position, the opening 12A is open. When the shield 13 is located at the closed position, the opening 12A is closed as indicated by the double-dashed line as shown in Fig. 1. At the closed position, the shield 13 hinders entrance of rain, wind, and airborne objects coming from the front into the helmet 11 to improve the visibility of the wearer. Although not particularly limited, it is preferred that the material of the shield 13 is a polycarbonate.

The two support mechanisms 20 maintain the position of the shield 13 when the shield 13 is not being operated. For example, when the shield 13 is moved to the open position, the two support mechanisms 20 maintain the open position until the next operation. When the shield 13 is moved to the closed position, the two support mechanisms 20 maintain the closed position until the next operation.

The helmet 11 includes an inner shell located at an inner side of the outer shell 12 defining the innermost shell. The material of the inner shell is a resin that absorbs impacts. Although not particularly limited, it is preferred that the material of the inner shell is any one selected from polyurethane and styrofoam resin.

The helmet 11 is provided with a screen device 30. The screen device 30 extends between a space defined by the opening 12A and the front surface 12F, which is located above the opening 12A. The screen device 30 has a portion located at the front surface 12F between the outer shell 12 and the inner shell and attached to the outer shell 12 by a shell attachment 14.

As shown in Fig. 1, the shell attachment 14 includes an outer surface 14a, and the outer surface 14a forms a portion of an outer surface of the outer shell 12. As a result, the shell attachment 14 is arranged without producing a large step with the surrounding surface in the outer surface of the outer shell 12.

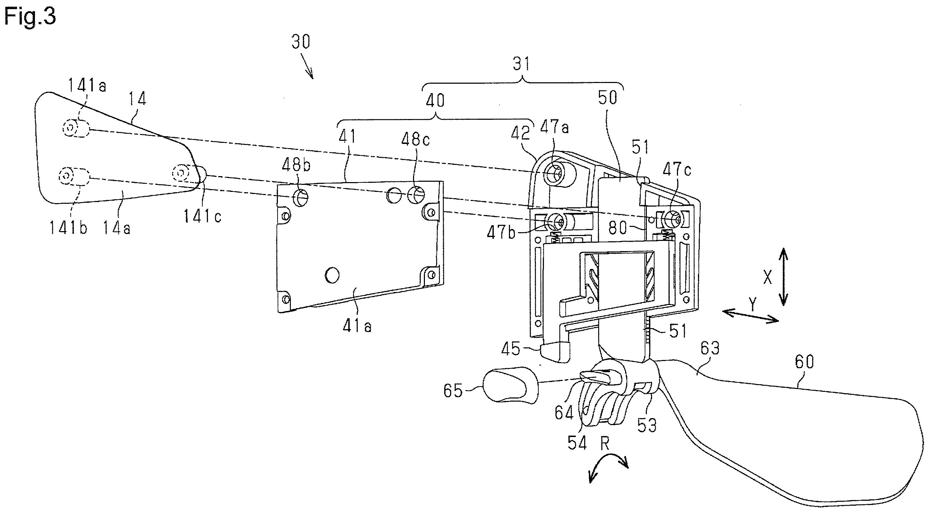

As shown in Fig. 3, the shell attachment 14 has an inner surface including a first protrusion 141a, a second protrusion 141b, and a third protrusion 141c extending inward. The first protrusion 141a, the second protrusion 141b, and the third protrusion 141c of the shell attachment 14 extend through the outer shell 12 and are coupled to the screen device 30, which is located at an inner side of the outer shell 12.

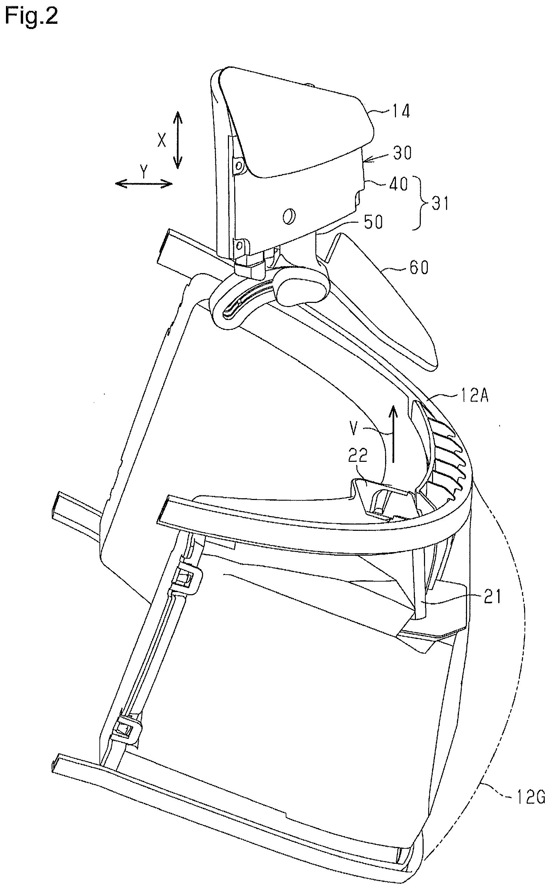

According to the invention, the screen device 30 includes a vertical movement mechanism 31 and a combiner 60 that shows an image projected onto the helmet. The vertical movement mechanism 31 includes a body 40 and a support 50 (refer to Fig. 2) coupled to the combiner 60. More specifically, when the protrusions 141a, 141b, and 141c are coupled to the body 40 of the vertical movement mechanism 31, the shell attachment 14 fixes the screen device 30 to the outer shell 12.

The first protrusion 141a is inserted into an insertion hole 47a of the body 40 and fastened by a screw or the like. The second protrusion 141b is inserted through a through hole 48b and into an insertion hole 47b of the body 40 and fastened by a screw or the like. The third protrusion 141c is inserted through a through hole 48c and into an insertion hole 47c of the body 40 and fastened by a screw or the like. When the vertical movement mechanism 31 is attached to the outer shell 12, the combiner 60 is located at an appropriate position relative to the helmet 11. Holes through which the protrusions 141a, 141b, and 141c are inserted are sufficient for a structure of the outer shell 12 that fixes the combiner 60 to the outer shell 12. Therefore, the combiner 60 is be fixed to the outer shell 12 without a large change in the structure of the outer shell 12, which needs to have mechanical durability.

As shown in Fig. 2, the screen device 30 is configured so that the vertical movement mechanism 31 is attached to the outer shell 12 by the shell attachment 14. The body 40 of the vertical movement mechanism 31 includes a first member 41 (refer to Fig. 3) and a second member 42 (refer to Fig. 3). According to the invention, the support 50 of the vertical movement mechanism 31 is configured to be moved and positioned in a vertical direction X of the outer shell 12 along a slide hole 80 of the body 40. The slide hole 80 corresponds to a passage through which the support 50 is vertically movably inserted.

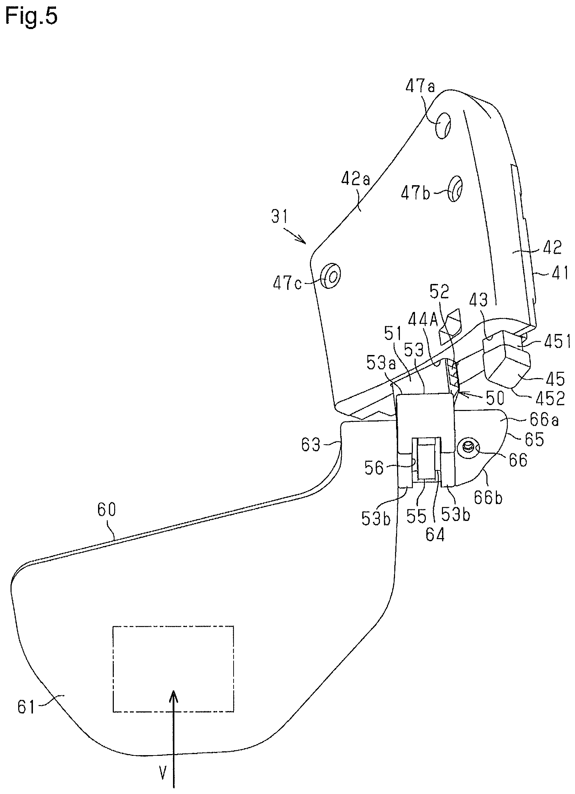

As shown in Fig. 3, the support 50 includes a distal end 51 that is located at a lower side in Fig. 3 and including an arcuate rail 53. The combiner 60 includes a supported portion 64 that is supported by the arcuate rail 53 of the support 50 in a slidable manner. The support 50 supports the combiner 60 in the opening 12A of the helmet 11 and allows vertical movement, that is, movement in the vertical direction X, of the combiner 60. The combiner 60 is a transparent screen that shows an image V (refer to Fig. 5). The image V is projected by a projector 21, which is arranged in the chin guard 12G (refer to Fig. 2) of the helmet 11, and is output from a projection outlet 22.

Since the combiner 60 is vertically movably supported, the combiner 60 is located at a position suitable for the field of view of the wearer. In addition, the set position of the screen is readily adjusted on the helmet.

The arcuate rail 53 of the support 50 has a rail hole 54 extending in a front-rear direction Y defining a longitudinal direction. The rail hole 54 is shaped as a curve having an arc and extending in the longitudinal direction. The supported portion 64 is flat and is fitted into the rail hole 54 of the arcuate rail 53 so that rotation in which the supported portion 64 acts as an axis is prohibited. The supported portion 64 slides in the rail hole 54 along an arc R extending in the longitudinal direction.

The rail hole 54 is curved rearward and downward as viewed from the front in the front-rear direction Y. The arcuate rail 53 allows the flat supported portion 64 to slide along the rail hole 54. At this time, the angle of the flat surface of the supported portion 64 changes in accordance with the curve of the arcuate rail 53, and the inclination of the combiner 60 (projection surface 61) having the supported portion 64 also changes with respect to the vertical direction. More specifically, the combiner 60 slides on the arcuate rail 53 in the front-rear direction Y to change the angle relative to the support 50.

Thus, the angle of the combiner 60 relative to the vertical movement mechanism 31, that is, the inclination of the combiner 60 with respect to the vertical direction, is changeable. This allows the combiner 60 to be located at a position that is more suitable for the field of view of the wearer.

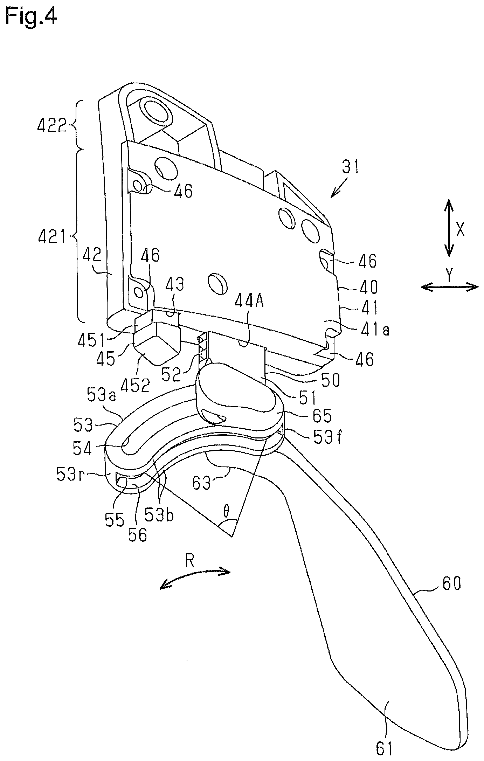

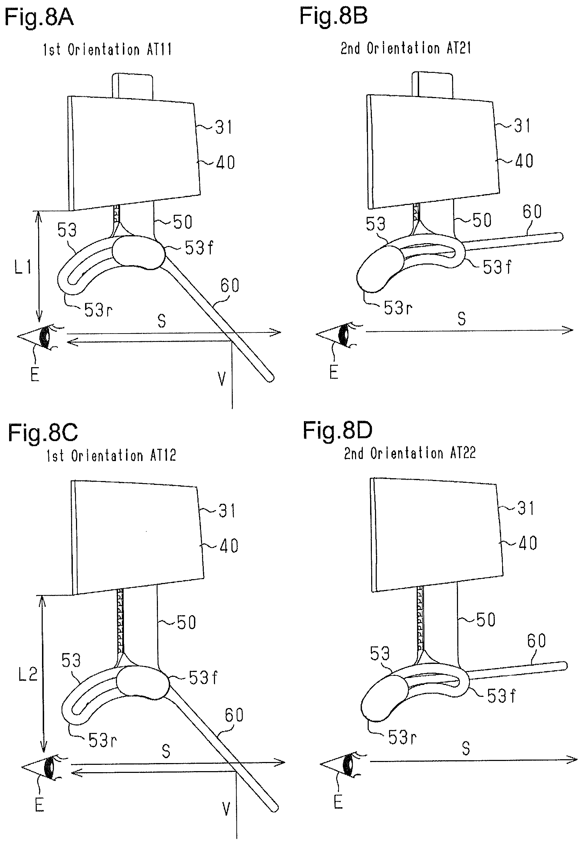

As shown in Fig. 4, the arcuate rail 53 includes a front end 53f and a rear end 53r. The support 50 allows the supported portion 64 to slide between the front end 53f and the rear end 53r so that the combiner 60 revolves along the arc R. The angle of the combiner 60 relative to the support 50 changes in a range of a central angle (change angle θ) of the arcuate rail 53. At this time, the orientation of the combiner 60 changes between a first orientation AT11, AT12 (refer to Figs. 8A and 8C) at which the projection surface 61 serving as the screen is in the field of view S of a wearer E and a second orientation AT21, AT22 (refer to Figs. 8B and 8D) at which the projection surface 61 is outside the field of view S of the wearer E. The first orientation AT11, AT12 and the second orientation AT21, AT22 are specified by differences in the angle of the projection surface 61 relative to the support 50.

The combiner 60 changes the angle relative to the support 50 in accordance with slide movement so that the position of the image V projected onto the projection surface 61 is adjusted between the first orientation AT11, AT12 and the second orientation AT21, AT22. In addition, occurrence of unexpected movement of the combiner 60 caused by oscillation is limited, for example, as compared to a structure that supports the combiner 60 to the support 50 by a hinge.

The first orientation AT11, AT12 is, for example, the orientation of the combiner 60 shown in Figs. 8A and 8C when the supported portion 64 is located at the front end 53f. The second orientation AT21, AT22 is, for example, the orientation of the combiner 60 shown in Figs. 8B and 8D when the supported portion 64 is located at the rear end 53r. More specifically, the second orientation AT21, AT22 recedes the supported portion 64 to the rear end 53r, thereby avoiding projection of the front end of the combiner 60 more frontward than the first orientation AT11, AT12.

As shown in Fig. 3, the vertical movement mechanism 31 is configured so that movement of the support 50 to be positioned relative to the body 40 in the vertical direction X is independent from movement of the combiner 60 relative to the support 50 in the rail hole 54 along the arc R extending in the longitudinal direction. That is, at each point that positions the support 50 in the vertical direction X, the support 50 allows the combiner 60 to move along the arc R to change the angle of the projection surface 61 of the combiner 60 relative to the support 50. With the adjustment of position and angle of the combiner 60, the image V is projected onto a more suitable position in the field of view of the wearer. That is, the support 50 is positioned at different points in the vertical direction X, and the angle of the combiner 60 relative to the support 50 is changed at each point where the support 50 is positioned.

The vertical movement mechanism 31 and the combiner 60 will be described in detail with reference to Figs. 4 to 7.

As shown in Figs. 4 and 5, the body 40 of the vertical movement mechanism 31 includes the first member 41, which is opposed to an inner surface of the outer shell 12, and the second member 42, which is opposed to the inner shell. The first member 41 includes an outer wall 41a opposed to the inner surface of the outer shell 12. The second member 42 includes an outer wall 42a opposed to the inner shell. Cell fasteners 46 are thread-fastened to the second member 42 to couple the first member 41 and the second member 42.

The body 40 accommodates a latch mechanism. The second member 42 includes a lower region 421 and an upper region 422. The latch mechanism is configured to be accommodated in the lower region 421 and does not use the upper region 422. Hence, the first member 41 has a size corresponding to the lower region 421. More specifically, the first member 41 is smaller than the second member 42, and the first member 41 is not coupled to the upper region 422 of the second member 42.

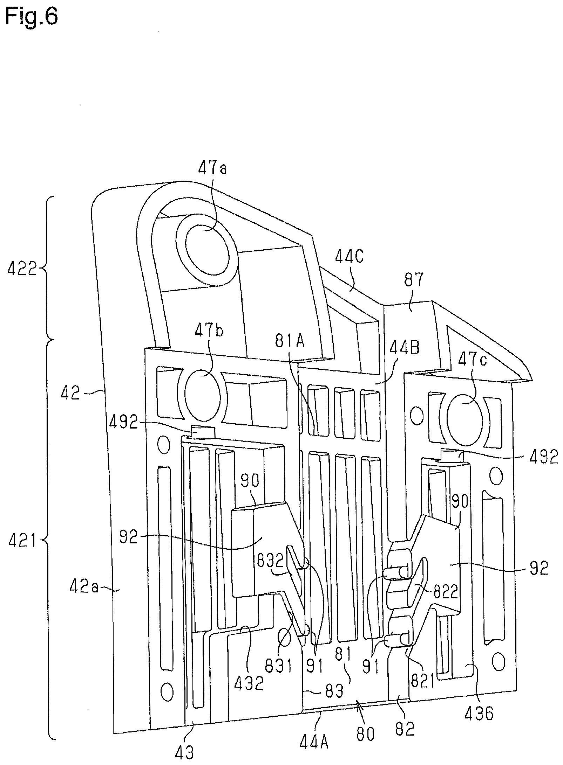

The body 40 includes a slide port 44A arranged at a lower side in the vertical direction X to allow insertion of the support 50. The support 50 is inserted from the slide port 44A into the slide hole 80 (refer to Fig. 6). The body 40 further includes an operating port 43 arranged at the lower side in the vertical direction X. The operating port 43 allows an operating portion 45 of a release mechanism to be located outside the body 40.

The operating portion 45 releases the latch mechanism that fixes the support 50, which is located in the body 40, to stepped positions. The operating portion 45 includes an operating end 452 arranged on an end, and a first operating shaft 451 extending from the operating end 452 to the inside of the body 40. The first operating shaft 451 is movable through the operating port 43 in an insertion direction. The operating end 452 has a larger outer periphery than the first operating shaft 451 so that the operating end 452 cannot be inserted into the operating port 43 further from the first operating shaft 451. The operating end 452 is shaped to have an end surface having a rear side in the front-rear direction Y that is inclined toward the operating port 43 so that the operating end 452 is readily operated by a finger of the wearer entering from the opening 12A.

The vertical movement mechanism 31 includes the arcuate rail 53 arranged on the distal end 51 of the support 50 and having the rail hole 54. The arcuate rail 53 extends as an arc having the change angle θ in the front-rear direction Y. The rail hole 54 horizontally extends through the arcuate rail 53 and is elongated in a direction in which the arc extends. The rail hole 54 is located between an upper rail 53a and a lower rail 53b of the arcuate rail 53. The rail hole 54 is defined by an inner portion of the arc of the upper rail 53a and an outer portion of the arc of the lower rail 53b.

The upper rail 53a is coupled to the distal end 51 of the support 50 and supports the arcuate rail 53. The lower rail 53b has an elongated hole 56 extending through a width-wise center of the rail to the rail hole 54 and extending in an extension direction of the rail. An urging portion 55 extends in the elongated hole 56 and projects into the rail hole 54 at least partially between the front end 53f and the rear end 53r. The urging portion 55 urges the flat surface of the supported portion 64 of the combiner 60 located in the rail hole 54 toward the upper rail 53a. This increases retaining power at a set position of the combiner 60 to restrict changes in the set position of the combiner 60 in the arcuate rail 53. The surface of the urging portion 55 opposed to the upper rail 53a may have roughness that increases the position retaining power such as grooves or irregularities to facilitate the positioning of the flat surface of the supported portion 64.

The support 50 includes a slide portion accommodated in the slide hole 80 (refer to Fig. 6) of the body 40. The slide portion has side surfaces having latch holes 52 arranged at predetermined intervals. Movement of the support 50 in the vertical direction X is restricted in the slide hole 80 of the body 40 at the intervals of the latch holes 52.

As shown in Fig. 5, the combiner 60 includes the projection surface 61, which is a transparent screen, and an extension 63 extending from the projection surface 61 in the direction of the support 50. The combiner 60 further includes the supported portion 64 inserted into the rail hole 54 of the arcuate rail 53 in the sideward direction and a fastening end 65 arranged on an end of the supported portion 64 to prevent separation of the supported portion 64 from the rail hole 54.

The fastening end 65 includes a hole into which the end of the supported portion 64 is inserted through the rail hole 54. The inserted end of the supported portion 64 is fastened by a screw coupled from a screw hole 66 in an orthogonal direction. As a result, the fastening end 65 is fastened to the end of the supported portion 64. That is, the supported portion 64 is inserted through the rail hole 54, and the end of the supported portion 64 is inserted into the hole formed in the fastening end 65. The fastening end 65 has the screw hole 66 extending in a direction orthogonal to the direction in which the end of the supported portion 64 extends. The fastening end 65 is fastened to the end of the supported portion 64 by the screw coupled to the screw hole 66. Each of the extension 63 and the fastening end 65 has a surface orthogonal to the supported portion 64 and in contact with a wall surface of the rail hole 54 (refer to Fig. 4). This limits loosening of the combiner 60 attached to the arcuate rail 53 in the rail hole 54 and entrapment of the combiner 60 when sliding.

The supported portion 64 directs the fastening end 65, which is operated from the opening 12A of the helmet 11, toward an outer side of the opening 12A. The fastening end 65 includes a front portion 66b and a rear portion 66a that is bulged more than the front portion 66b as viewed from front. As viewed from front, the fastening end 65 has a slope that eases contact of a finger pad of the wearer. This allows the wearer of the helmet 11 to readily adjust the position of the combiner 60 relative to the support 50 with a finger pad of the wearer.

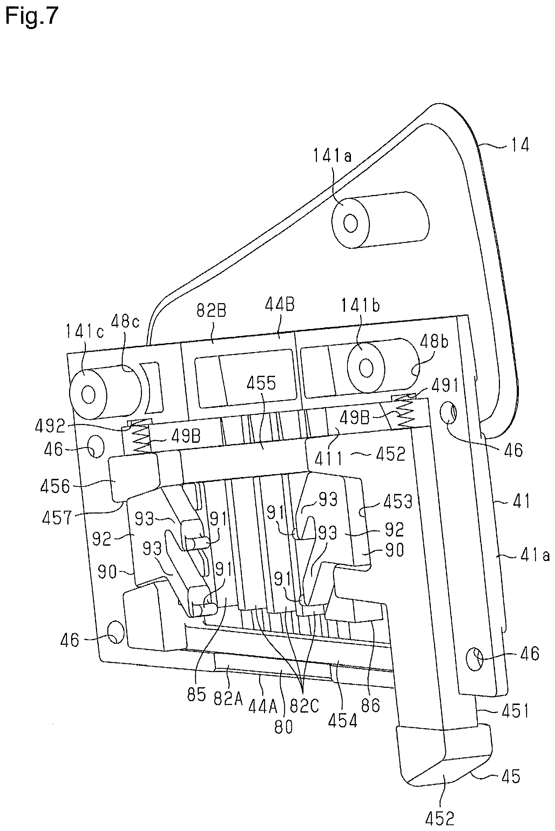

The latch mechanism will be described in detail with reference to Figs. 6 and 7. Figs. 6 and 7 are diagrams of the first member 41 and the second member 42 that are uncoupled and separated. Each of Figs. 6 and 7 duplicately shows positioning components 90. The body 40 is formed by coupling the first member 41 to a portion of the second member 42 located at the outer shell 12 with the fasteners 46 or the like.

In the body 40, the first protrusion 141a of the shell attachment 14 is attached to the insertion hole 47a of the second member 42. Also, in the body 40, the second and third protrusions 141b and 141c of the shell attachment 14 are inserted through the through holes 48b and 48c of the first member 41 into the insertion holes 47b and 47c of the second member 42.

The first member 41 and the second member 42 have sides opposed to each other and hold the latch mechanism between the opposed sides. The first member 41 has a size corresponding to the lower region 421 and does not extend to a region corresponding to the first protrusion 141a of the shell attachment 14. In the body 40, the latch mechanism is arranged between the first member 41 and the second member 42 in the lower region 421 located at a lower side that does not interfere with the protrusions 141a, 141b, and 141c of the shell attachment 14 in the vertical direction X.

The first member 41 and the second member 42 have the slide hole 80 extending through the center in the vertical direction. The slide hole 80 includes the slide port 44A located at a lower side and a slide port 44B located at an upper side. The slide hole 80 is defined as a passage having a rectangular cross section by an inner flat surface 81 and an inner guide 81A located inside the second member 42, inner wall surfaces 82 and 83 located inside the second member 42, and guides 82C (refer to Fig. 7) located inside the first member 41.

The second member 42 includes a slide groove 44C located above the slide port 44B and continuous with the slide hole 80. The slide groove 44C includes a flat surface that is continuous with the inner guide 81A and wall surfaces 87 that are continuous with the inner wall surfaces 82 and 83. The guides 82C of the first member 41 rise from the outer wall 41a of the first member 41 and extend in a vertical movement direction of the support 50. Each guide 82C has an end that is coplanar with an inner flat surface 82A of the first member 41 defining the slide port 44A and an inner flat surface 82B of the first member 41. The inner guide 81A of the second member 42 has an end surface that rises from the outer wall 42a of the second member 42 and is coplanar with the inner flat surface 81 of the second member 42.

The body 40 includes an accommodation space that accommodates the latch mechanism.

The accommodation space includes two vertical spaces extending at opposite sides of the slide hole 80 and lateral spaces that connect the two vertical spaces, which are located at opposite sides of the slide hole 80, so as not to interfere with the slide hole 80. The first member 41 includes a first space 411 including the two vertical spaces and the lateral spaces. The first space 411 is shaped as a frame in which the guides 82C are located at a central position and bases 85 and 86 are located at positions corresponding to the positioning components 90. The second member 42 includes a second space 432 and a third space 436 corresponding to the two vertical spaces located at opposite sides of the slide hole 80.

The body 40 has wide voids in the first space 411 at a position opposed to the second space 432 and a position opposed to the third space 436 that do not interfere with the slide hole 80. That is, the wide voids refer to the vertical spaces. The body 40 also has narrow voids in the first space 411 at positions that are not opposed to the second space 432 nor the third space 436 and avoiding interference with the slide hole 80. That is, the narrow voids refer to the lateral spaces.

The accommodation space accommodates part of the operating portion 45 and the positioning components 90. The positioning components 90 include hooks 91 that fit to the latch holes 52 in the support 50. The positioning components 90 extend and retract relative to passages 821 and 831 formed in the inner wall surfaces 82 and 83 to move the hooks 91 to and away from the slide hole 80. When the hooks 91 are moved to the slide hole 80 and fitted to the latch holes 52 in the support 50, the hooks 91 fix the position of the support 50 in the vertical direction X. When the hooks 91 are moved out of the slide hole 80 and separated from the latch holes 52 of the support 50, the hooks 91 free movement of the support 50 in the vertical direction X.

The passages 821 and 831 formed in the inner wall surfaces 82 and 83 have slopes extending downward toward the slide hole 80. Each positioning component 90 includes a main body 92 and two hooks 91 extending diagonally downward from the main body 92. The main body 92 arranged in the accommodation space and the two hooks 91 are joined by two arms 93 having slopes along the slope of the corresponding one of the passages 821 and 831. The passages 821 and 831 respectively include central guides 822 and 832, and the two arms 93 are arranged in passages defined by the central guides 822 and 832.

Since the arms 93 are arranged in the passages 821 and 831 having the downward slopes, when downward force is applied to the hooks 91 from the support 50, the hooks 91 are drawn to the slide hole 80 and engage with the latch holes 52 to prevent downward movement of the support 50. When upward force from the support 50 is applied to the hooks 91, which are supported by the arms 93 arranged in the passages 821 and 831 having the downward slopes, the hooks 91 are forced back from the slide hole 80 and separated from the latch holes 52 to allow upward movement of the support 50. That is, the positioning components 90 allow upward movement of the support 50, which is drawn out downward, while fixing the vertical position of the support 50. When the support 50 is pushed upward from below, the position of the combiner 60, which is coupled to the support 50, is readily adjusted.

The operating portion 45 includes the first operating shaft 451 coupled to the operating end 452, a second operating shaft 456 located at a side of the slide hole 80 opposite from the first operating shaft 451, and a lower connecting rod 454 and an upper connecting rod 455 that connect the first operating shaft 451 and the second operating shaft 456 through the lateral spaces. The lower connecting rod 454 connects a lower end of the first operating shaft 451 in the accommodation space and a lower end of the second operating shaft 456. The upper connecting rod 455 connects an upper end of the first operating shaft 451 and an upper end of the second operating shaft 456.

When the operating end 452 is pushed and the first operating shaft 451 is moved upward, the second operating shaft 456, which is connected with the upper connecting rod 455 and the lower connecting rod 454, is also moved upward. A spring 49B is arranged between the upper wall of the accommodation space and each of the upper end of the first operating shaft 451 and the upper end of the second operating shaft 456 to downwardly urge the upper end. The springs 49B are arranged in receptacles 491 and 492 located in an upper part of the accommodation space to downwardly urge the upper end of the first operating shaft 451 and the upper end of the second operating shaft 456, respectively. Thus, the first operating shaft 451 and the second operating shaft 456 are normally located in a lower part of the accommodation space. When the operating end 452 is pushed upward by an external operation, the first operating shaft 451 and the second operating shaft 456 are located in an upper part of the accommodation space against the urging force.

The first operating shaft 451 includes a holder 453 that holds the main body 92 of the positioning component 90 in the vertical direction. The second operating shaft 456 includes a holder 457 that holds the main body 92 of the positioning component 90 in the vertical direction.

When the first operating shaft 451 and the second operating shaft 456 are located in the lower part of the accommodation space, the positioning components 90 force the arms 93 into the downwardly sloping passages 821 and 831 so that the hooks 91 move to the slide hole 80 to fix the position of the support 50 in the vertical direction X. When the operating end 452 is pushed upward by an external operation and the first operating shaft 451 and the second operating shaft 456 are located in the upper part of the accommodation space, the positioning components 90 draw the arms 93 out of the downwardly sloping passages 821 and 831 so that the hooks 91 move out of the slide hole 80 to allow vertical movement of the support 50 in the vertical direction X.

As described above, the vertical movement mechanism 31 is fixed by the latch mechanism. This restricts vertical movement of the combiner 60 caused by oscillation and maintains the adjustment position of the combiner 60. When an external operation is performed on the latch mechanism, vertical movement of the combiner 60 is allowed.

In the present embodiment, the latch mechanism includes the accommodation space, the operating portion 45, and the positioning components 90.

The operation and advantages of the present embodiment will be described with reference to Figs. 8A to 8D.

As shown in Fig. 8A, the screen device 30 is configured so that the support 50 is vertically moved in the vertical movement mechanism 31 to adjust the height of the combiner 60 having the first orientation AT11 and supported by the support 50 to a height L1 of the field of view S of the wearer E in the vertical direction X.

As shown in Fig. 8C, when the field of view S of the wearer E is at a height L2 that is lower than the height L1 of the field of view S of the wearer E, the support 50 is moved downward in the vertical movement mechanism 31, so that the height of the combiner 60 having the first orientation AT12 in the vertical direction X is adjusted to the height L2 of the field of view S of the wearer E.

As shown in Fig. 8B, the relative angle of the combiner 60 having the first orientation AT11 and supported by the support 50 is changed. In this case, the combiner 60 slides along the arcuate rail 53 in the front-rear direction Y to have the second orientation AT21, at which the combiner 60 is located outside the field of view S of the wearer E. Thus, without vertical movement related to the height-wise direction, the orientation is changed from the first orientation AT11 to the second orientation AT21 while maintaining the height L1. This ensures the field of view S that is not bothered by images when images are not needed. When images are needed, the orientation is changed from the second orientation AT21 to the first orientation AT11 to ensure that the field of view S includes images.

As shown in Fig. 8D, when the field of view S of the wearer E is located at the height L2, the support 50 changes the orientation of the combiner 60 from the first orientation AT12 to the second orientation AT22, at which the combiner 60 is located outside the field of view S of the wearer E. Thus, without vertical movement related to the height-wise direction, the orientation is changed from the first orientation AT12 to the second orientation AT22 while maintaining the height L2. This ensures the field of view S that is not bothered by images. When images are needed, the orientation is changed from the second orientation AT22 to the first orientation AT12 to ensure that the field of view S includes images.

According to the present embodiment, images projected by the projector 21 are shown at a suitable position in the field of view S of the wearer of the helmet 11.

The embodiment obtains the following advantages.
(1) The combiner 60 is supported in the helmet 11 and is vertically movable in the opening 12A of the helmet 11. This allows the combiner 60 to be located at a position suitable for the field of view S of the wearer. Thus, the set position of the combiner 60 in the helmet 11 is readily adjusted. In addition, since the combiner 60 moves in the vertical direction X, interference of the head of the wearer with the combiner 60 is limited when the wearer puts on and off the helmet.
(2) Since the vertical movement mechanism 31 is attached to the outer shell 12, the adjustment position of the combiner 60 is readily maintained in addition to the combiner 60 being located at a position suitable for the field of view S of the wearer.
(3) The angle of the combiner 60 relative to the vertical movement mechanism 31 is changeable. This allows the combiner 60 to be located at a more appropriate angle with respect to a sightline direction of the wearer.
(4) The relative angle is changeable separately from vertical movement. This allows the position and the angle of the combiner 60 to be adjusted so that images are projected onto a position suitable for the field of view S of the wearer.
(5) The combiner 60 slides so that the relative angle is adjusted between the first orientation AT11, AT12 and the second orientation AT21, AT22. In addition, unexpected movement caused by oscillation is reduced, for example, as compared to a support using a hinge.
(6) The vertical movement mechanism 31 is fixed by the latch mechanism. This restricts vertical movement caused by oscillation and maintains the adjustment position of the combiner 60. When an external operation is performed on the latch mechanism, vertical movement is allowed.
(7) When the combiner 60 has the first orientation AT11, AT12, the supported portion 64 is located at the front end 53f (first position). When the combiner 60 has the second orientation AT21, AT22, the supported portion 64 is located at the rear end 53r (second position). Thus, for example, when the combiner 60 is not used, the combiner 60 having the second orientation AT21, AT22 will not project more frontward than the combiner 60 having the first orientation AT11, AT12. This limits interference of the combiner 60 with the shield 13.

The embodiment may be modified as follows. The embodiment and the following modified examples can be combined as long as the combined modified examples remain technically consistent with each other.

The positions of the positioning components 90 are not limited to the opposite sides of the slide hole 80. For example, a positioning component 90 may be configured to be located at only one of the opposite sides of the slide hole 80. This configuration also obtains advantages corresponding to (1) to (7). In addition, one of the positioning components 90 and the spring 49B used for the positioning component 90 may be omitted. Further, the structure of the body 40 for arranging the positioning components 90 may be simplified, and the body 40 may be reduced in size. Reduction in size of the body 40 reduces an amount of the outer shell cut away for fixing the body 40 and an amount of an impact absorbing liner for arranging the body 40. This limits adverse effects on the impact-related properties of the helmet caused by installation of a support mechanism.

The combiner may be moved forward along an arcuate rail to have an orientation where the combiner is outside the field of view. For example, when the arcuate rail is curved upwardly forward, forward movement results in an orientation of the combiner located outside the field of view S.

As long as the angle of the combiner relative to the support is changeable, the combiner may be supported and coupled to the support by a structure other than the arcuate rail, which is, for example, a hinge.

As long as a screen device is appropriately mounted on a helmet, the screen device may be attached to a member of the helmet other than the outer shell, which is, for example, an EPS liner arrange at an inner side of the outer shell.

## Claims

1. A screen device (30), comprising:
a combiner (60) that is suitable to show an image projected onto a helmet (11); and
a vertical movement mechanism (31) which can be attached to a shell (12) of a helmet (11), wherein the vertical movement mechanism (31) supports the combiner (60) so that the combiner (60) is movable in a vertical direction (X) and so that an inclination of the combiner (60) is changeable with respect to the vertical direction (X),
wherein
the vertical movement mechanism (31) includes a body (40) that is suitable to be fixed to an outer shell (12) of a helmet (11) and a support (50) that vertically moves relative to the body (40),
the combiner (60) includes a supported portion (64) supported by the support (50), and
the body (40) of the vertical movement mechanism (31) includes a first member (41) and a second member (42),
whereby the screen device (30) is **characterized in that** the support (50) is configured to be moved and positioned in a vertical direction (X) of the outer shell (12) along a slide hole (80) corresponding to a passage through which the support (50) is vertically movably inserted.

2. The screen device (30) according to claim 1, wherein the support (50) supports the combiner (60) so that the inclination is changeable at each point to which the support (50) vertically moves.

3. The screen device (30) according to claim 1 or 2, wherein
the support (50) is configured to be positioned at different points in the vertical direction (X), and
the support (50) supports the combiner (60) so that the inclination is changeable at each positioned point in the vertical direction (X).

4. The screen device (30) according to any one of claims 1 to 3, wherein
a first orientation of the combiner (60) refers to an orientation of the combiner (60) located in a field of view of a wearer,
a second orientation of the combiner (60) refers to an orientation of the combiner (60) located outside the field of view of the wearer, and
the support (50) allows the supported portion (64) to slide relative to the support (50) so that the inclination is changed so as to change the orientation of the combiner (60) between said first orientation and said second orientation in accordance with the change in the inclination.

5. The screen device (30) according to claim 4, wherein
the body (40) accommodates a latch mechanism that fixes the support (50) to different stepped positions in the slide hole (80), and
the vertical movement mechanism (31) allows the support (50) to be vertically moved by an external operation performed on the latch mechanism.

6. The screen device (30) according to claim 5, wherein
the support (50) includes a slide portion configured to vertically move in the slide hole (80) and latch holes (52) arranged in a side surface of the slide portion at a predetermined interval in the vertical direction (X),
the latch mechanism includes a positioning component (90) and an operating portion (45) coupled to the positioning component (90) and externally operated, and
the positioning component (90) includes a hook (91) configured to be fitted to and separated from the latch holes (52).

7. The screen device (30) according to any one of claims 4 to 6, wherein
the support (50) includes an arcuate rail (53) extending between a first position and a second position that is located rearward and downward from the first position,
the supported portion (64) engages the rail (53) and is configured to slide between said first position and said second position in an extension direction of the rail (53),
when the supported portion (64) is located at said first position, the combiner (60) has the first orientation, and
when the supported portion (64) is located at said second position, the combiner (60) has the second orientation.

8. The screen device (30) according to any one of claims 1 to 6, wherein
the support (50) includes an arcuate rail (53) that is suitable for extending in a front-rear direction of the helmet (11) defining a longitudinal direction,
the supported portion (64) engages the rail (53) and is configured to slide in an extension direction of the rail (53), and
the inclination of the combiner (60) is changed by sliding of the supported portion (64) along the rail (53).

9. The screen device (30) according to claim 8, wherein
the supported portion (64) includes a flat part,
the rail (53) includes a rail hole (54),
the supported portion (64) is fitted into the rail hole (54) so that rotation in which the supported portion (64) acts as an axis is prohibited,
the supported portion (64) is configured to slide in the rail hole (54) along an arc extending in the longitudinal direction,
the supported portion (64) includes a flat surface, and
when the supported portion (64) slides and an angle of the flat surface changes along a curve of the rail (53), the inclination of the combiner (60) changes.

10. A helmet (11), comprising:
a projector that projects an image; and
the screen device (30) according to any one of claims 1 to 9, wherein the screen device (30) shows the image projected by the projector (21) in a field of view of a wearer.

## Patentansprüche

1. Bildschirmvorrichtung (30), umfassend:
einen Kombinator (60), der dazu geeignet ist, ein Bild zu zeigen, das auf einen Helm (11) projiziert ist; und
einen vertikalen Bewegungsmechanismus (31), der an einer Schale (12) eines Helmes (11) angebracht werden kann, worin der vertikale Bewegungsmechanismus (31) den Kombinator (60) unterstützt, so dass der Kombinator (60) in einer vertikalen Richtung (X) bewegbar ist, und so dass eine Neigung des Kombinators (60) im Hinblick auf die vertikale Richtung (X) veränderlich ist,
worin
der vertikale Bewegungsmechanismus (31) einen Körper (40), der dazu geeignet ist, an einer äußeren Schale (12) eines Helmes (11) befestigt zu werden, und eine Abstützung (50), die sich vertikal im Hinblick auf den Körper (40) bewegt, umfasst,
der Kombinator (60) einen abgestützten Abschnitt (64) umfasst, der von der Abstützung (50) abgestützt ist, und
der Körper (40) des vertikalen Bewegungsmechanismus (31) ein erstes Element (41) und ein zweites Element (42) umfasst,
wobei die Bildschirmvorrichtung (30) **dadurch gekennzeichnet ist, dass** die Abstützung (50) dazu eingerichtet ist, in einer vertikalen Richtung (X) der äußeren Schale (12) entlang eines Gleitloches (80) bewegt und positioniert zu werden, das einem Durchgang entspricht, durch welchen die Abstützung (50) vertikal bewegbar eingefügt ist.

2. Bildschirmvorrichtung (30) nach Anspruch 1, worin die Abstützung (50) den Kombinator (60) abstützt, so dass die Neigung an jedem Punkt veränderlich ist, zu dem sich die Abstützung (50) vertikal bewegt.

3. Bildschirmvorrichtung (30) nach Anspruch 1 oder 2, worin
die Abstützung (50) dazu eingerichtet ist, an verschiedenen Punkten in der vertikalen Richtung (X) positioniert zu werden, und
die Abstützung (50) den Kombinator (60) abstützt, so dass die Neigung an jedem positionierten Punkt in der vertikalen Richtung (X) veränderlich ist.

4. Bildschirmvorrichtung (30) nach einem der Ansprüche 1 bis 3, worin
eine erste Orientierung des Kombinators (60) sich auf eine Orientierung des Kombinators (60) bezieht, die in einem Sichtfeld eines Trägers gelegen ist,
eine zweite Orientierung des Kombinators (60) sich auf eine Orientierung des Kombinators (60) bezieht, die außerhalb des Sichtfelds des Trägers gelegen ist, und
die Abstützung (50) dem abgestützten Abschnitt (64) ermöglicht, relativ zur Abstützung (50) zu gleiten, so dass die Neigung geändert wird, um die Orientierung des Kombinators (60) zwischen der genannten ersten Orientierung und der genannten zweiten Orientierung gemäß der Veränderung der Neigung zu ändern.

5. Bildschirmvorrichtung (30) nach Anspruch 4, worin
der Körper (40) einen Rastmechanismus beherbergt, der die Abstützung (50) an verschiedenen abgestuften Positionen im Gleitloch (80) fixiert, und
der vertikale Bewegungsmechanismus (31) der Abstützung (50) ermöglicht, durch eine externe Betätigung, die am Rastmechanismus durchgeführt wird, vertikal bewegt zu werden.

6. Bildschirmvorrichtung (30) nach Anspruch 5, worin
die Abstützung (50) einen Gleitabschnitt, der dazu eingerichtet ist, sich vertikal im Gleitloch (80) zu bewegen, und Rastlöcher (52), die in einer Seitenfläche des Gleitabschnitts in einem vorbestimmten Intervall in der vertikalen Richtung (X) angeordnet sind, umfasst,
der Rastmechanismus einen Positionierungsbestandteil (90) und einen Betätigungsabschnitt (45) umfasst, der mit dem Positionierungsbestandteil (90) gekoppelt ist und extern betätigt wird, und
der Positionierungsbestandteil (90) einen Haken (91) umfasst, der dazu eingerichtet ist, zu den Rastlöchern (52) zu passen und davon getrennt zu werden.

7. Bildschirmvorrichtung (30) nach einem der Ansprüche 4 bis 6, worin
die Abstützung (50) eine gekrümmte Schiene (53) umfasst, die sich zwischen einer ersten Position und einer zweiten Position erstreckt, die rückwärtig und abwärts von der ersten Position gelegen ist,
der abgestützte Abschnitt (64) in die Schiene (53) eingreift und dazu eingerichtet ist, zwischen der genannten ersten Position und der genannten zweiten Position in einer Erstreckungsrichtung der Schiene (53) zu gleiten,
wenn der abgestützte Abschnitt (64) an der genannten ersten Position gelegen ist, der Kombinator (60) die erste Orientierung hat, und
wenn der abgestützte Abschnitt (64) an der genannten zweiten Position gelegen ist, der Kombinator (60) die zweite Orientierung hat.

8. Bildschirmvorrichtung (30) nach einem der Ansprüche 1 bis 6, worin
die Abstützung (50) eine gekrümmte Schiene (53) umfasst, die dazu geeignet ist, sich in einer Vorne-Hinten-Richtung des Helmes (11) zu erstrecken, die eine Längsrichtung definiert,
der abgestützte Abschnitt (64) in die Schiene (53) eingreift und dazu eingerichtet ist, in einer Erstreckungsrichtung der Schiene (53) zu gleiten, und
die Neigung des Kombinators (60) durch Gleiten des abgestützten Abschnitts (64) entlang der Schiene (53) geändert wird.

9. Bildschirmvorrichtung (30) nach Anspruch 8, worin
der abgestützte Abschnitt (64) einen ebenen Teil umfasst,
die Schiene (53) ein Schienenloch (54) umfasst,
der abgestützte Abschnitt (64) in das Schienenloch (54) eingefügt ist, so dass eine Drehung, in der der abgestützte Abschnitt (64) als eine Achse wirkt, verhindert ist,
der abgestützte Abschnitt (64) dazu eingerichtet ist, im Schienenloch (54) entlang eines Bogens, der sich in der Längsrichtung erstreckt, zu gleiten,
der abgestützte Abschnitt (64) eine ebene Fläche umfasst, und
wenn der abgestützte Abschnitt (64) gleitet und ein Winkel der ebenen Fläche sich entlang einer Kurve der Schiene (53) ändert, die Neigung des Kombinators (60) sich ändert.

10. Helm (11), umfassend:
einen Projektor, der ein Bild projiziert; und
die Bildschirmvorrichtung (30) nach einem der Ansprüche 1 bis 9, worin die Bildschirmvorrichtung (30) das Bild, das vom Projektor (21) projiziert wird, in einem Sichtfeld eines Trägers zeigt.

## Revendications

1. Un dispositif d'écran (30) comprenant :
un combinateur (60) qui est apte à montrer une image projetée sur un casque (11) ; et
un mécanisme de mouvement vertical (31) qui peut être fixé à la coque (12) d'un casque (11), dans lequel le mécanisme de mouvement vertical (31) supporte le combinateur (60) de sorte que le combinateur (60) soit mobile dans une direction verticale (X) et qu'une inclinaison du combinateur (60) soit modifiable par rapport à la direction verticale (X),
dans lequel
le mécanisme de mouvement vertical (31) comprend un corps (40) qui est apte à être fixé à une coque extérieure (12) d'un casque (11) et un support (50) qui se déplace verticalement par rapport au corps (40),
le combinateur (60) comprend une partie supportée (64) supportée par le support (50), et
le corps (40) du mécanisme de mouvement vertical (31) comprend un premier élément (41) et un deuxième élément (42),
dans lequel le dispositif d'écran (30) est **caractérisé par le fait que** le support (50) est configuré pour être déplacé et positionné dans une direction verticale (X) de la coque extérieure (12) le long d'un trou de glissement (80) correspondant à un passage à travers lequel le support (50) est inséré verticalement de manière mobile.

2. Le dispositif d'écran (30) selon la revendication 1, dans lequel le support (50) soutient le combinateur (60) de manière à ce que l'inclinaison soit modifiable à chaque point auquel le support (50) se déplace verticalement.

3. Le dispositif d'écran (30) selon la revendication 1 ou 2, dans lequel le support (50) est configuré pour être positionné en différents points de la direction verticale (X), et le support (50) soutient le combinateur (60) de manière à ce que l'inclinaison soit modifiable à chaque point positionné dans la direction verticale (X).

4. Le dispositif d'écran (30) selon l'une quelconque des revendications 1 à 3, dans lequel :
une première orientation du combinateur (60) se réfère à une orientation du combinateur (60) situé dans un champ de vision d'un porteur,
une deuxième orientation du combinateur (60) se réfère à une orientation du combinateur (60) situé en dehors du champ de vision du porteur, et
le support (50) permet à la partie supportée (64) de glisser par rapport au support (50) de manière à modifier l'inclinaison afin de changer l'orientation du combinateur (60) entre ladite "première orientation" et ladite- deuxième orientation, conformément à la changement d'inclinaison.

5. Le dispositif d'écran (30) selon la revendication 4, dans lequel
le corps (40) contient un mécanisme de verrouillage qui fixe le support (50) à différentes positions échelonnées dans le trou de glissement (80), et
le mécanisme de déplacement vertical (31) permet au support (50) d'être déplacé verticalement par une opération externe effectuée sur le mécanisme de verrouillage.

6. Le dispositif d'écran (30) selon la revendication 5, dans lequel
le support (50) comprend une partie coulissante configurée pour se déplacer verticalement dans le trou de glissement (80) et trous de verrouillage (52) disposés sur une surface latérale de la partie coulissante à un intervalle prédéterminé dans la direction verticale (X),
le mécanisme de verrouillage comprenant un élément de positionnement (90) et une partie opérationnelle (45) couplée à l'élément de positionnement (90) et actionnée de l'extérieur, et
l'élément de positionnement (90) comprenant un crochet (91) configuré pour être monté sur et séparé des trous de verrouillage (52).

7. Le dispositif d'écran (30) selon l'une quelconque des revendications 4 à 6, dans lequel le support (50) comprend un rail arqué (53) qui s'étend entre une première position et une seconde position située vers l'arrière et vers le bas par rapport à la première position, la partie supportée (64) s'engage dans le rail (53) et est configurée pour coulisser entre ladite première position et ladite deuxième position dans une direction d'extension du rail (53),
lorsque la partie supportée (64) est située à ladite première position, le combinateur (60) a la première orientation, et
lorsque la partie supportée (64) est située dans ladite deuxième position, le combinateur (60) a la deuxième orientation.

8. Le dispositif d'écran (30) selon l'une quelconque des revendications 1 à 6, dans lequel le support (50) comprend un rail arqué (53) qui peut s'étendre dans une direction avant-arrière du casque (11) qui définit une direction longitudinale,
la partie supportée (64) s'engage dans le rail (53) et est configurée pour glisser dans une direction d'extension du rail (53), et
l'inclinaison du combinateur (60) est modifiée par le glissement de la partie supportée (64) le long du rail (53).

9. Le dispositif d'écran (30) selon la revendication 8, dans lequel
la partie supportée (64) comprend une partie plate,
le rail (53) comprend un trou de rail (54),
la partie supportée (64) est montée dans le trou de rail (54) de manière à ce que la rotation dans laquelle la partie supportée (64) joue le rôle d'axe est interdite,
la partie supportée (64) est configurée pour glisser dans le trou de rail (54) le long d'un arc s'étendant dans la direction longitudinale,
la partie supportée (64) comprend une surface plane, et
lorsque la partie supportée (64) glisse et un angle de la surface plane change le long d'une courbe du rail (53), l'inclinaison du combinateur (60) change.

10. Un casque (11) comprenant :
un projecteur qui projette une image ; et
le dispositif d'écran (30) selon l'une quelconque des revendications 1 à 9, dans lequel le dispositif d'écran (30) montre l'image projetée par le projecteur (21) dans un champ de vision d'un porteur.
